# EUROPEAN PATENT SPECIFICATION

(11) **EP 3 440 807 B1**
(45) Date of publication and mention of the grant of the patent: **24.06.2020**
(21) Application number: 17792400.8
(22) Date of filing: 01.04.2017
(51) Int. Cl.: H04L 12/70, H04L 12/723, H04L 12/947, H04L 12/751

(54) **LABEL DATABASE SYNCHRONIZATION IN A PACKET SWITCHED COMMUNICATION NETWORK**
ETIKETT DATENBANKSYNCHRONISATION IN EINEM PAKETVERMITTELTEN KOMMUNIKATIONSNETZWERK
SYNCHRONISATION DE BASE DE DONNÉES D'ÉTIQUETTES DANS UN RÉSEAU DE COMMUNICATION À COMMUTATION PAR PAQUETS

(30) Priority: 03.05.2016 IN 201641015408
(43) Date of publication of application: 13.02.2019
(73) Proprietor: Huawei Technologies Co., Ltd., Longgang District Shenzhen, Guangdong 518129 (CN)
(72) Inventor: PALLE, Udayasree, Bengaluru 560 037 Karnataka (IN); DHODY, Dhruv, Bengaluru 560 037 Karnataka (IN)
(74) Representative: Goddar, Heinz J.
(86) International application number: PCT/CN2017/079349
(87) International publication number: WO 2017/190573

(56) References cited:
- WO-A1-2011/079962
- CN-A- 103 650 453
- CN-A- 103 795 629
- US-B1- 8 885 463

## Description

### TECHNICAL FIELD

The present disclosure refers to traffic engineering in a communication network and more specifically, refers to database synchronization in a packet switched communication network.

### BACKGROUND

Existing network systems are often complex and demanding in terms of parameters such as agility, adaptability, robustness, efficiency, performance and scalability. Apart from such demands, service providers would also like to dynamically adapt to requests of customers. Meeting these requirements is possible by implementation of Software Defined Networks (SDN). Service providers may transition to SDN enabled networks by using existing path computation element (PCE) components from the current network systems to function as a central controller of SDN enabled networks, which would in turn leverage the existing PCE network components.

The path computation element communication protocol (PCEP) provides procedures for PCEs to perform route computations in response to path computation client (PCC) requests. PCEP extension for PCE-initiation Label Switch Path (LSP) setup in a stateful PCE model describes a set of extension to PCEP to enable active control of Multiprotocol Label Switching - Traffic Engineering (MPLS-TE) tunnels.

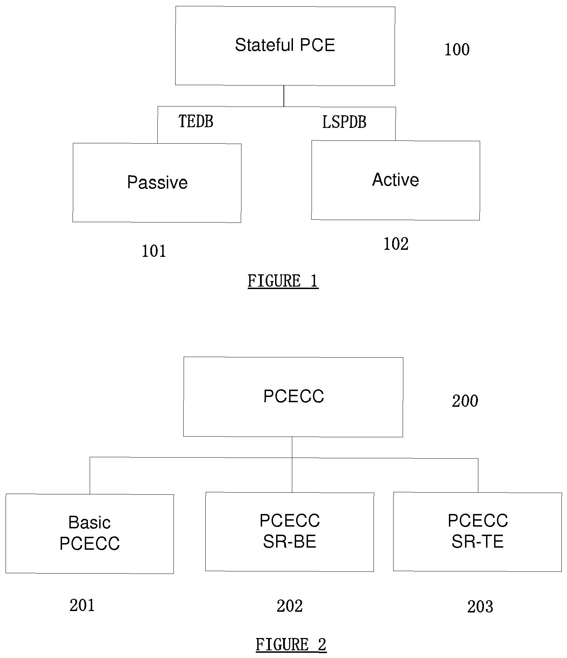

Besides storing network state in the Traffic Engineering Database (TEDB), stateful PCE also stores the state of all computed paths or LSPs and their resources in Label Switch Path Database (LSPDB). Stateful PCE may be categorized as shown in Figure 1 as passive stateful PCE 101 and active stateful PCE 102. Passive Stateful PCE 101 uses the TEDB and LSPDB during path computation and the computation is done only when it is requested by PCC. While Active stateful PCE 102 allows LSP to be delegated to the PCE where PCE becomes the owner of the LSP and can change any attribute of the LSP at anytime. PCE can control the LSPs and provide the path to the PCC which may continue to use Resource Reservation Protocol (RSVP) to signal the path.

The implementation of the stateful PCE however, requires synchronization of the LSPDB from PCC to PCE to provide a checkpoint-in-time state replica of a PCC's LSP state in a PCE. LSP state synchronization is performed immediately after the initialization phase. However, LSP state synchronization is not always necessary following a PCEP session restart. If the state of both PCEP peers did not change, the synchronization phase may be skipped. This would therefore, result in significant savings in both control-plane data exchanges and the time it takes for the stateful PCE to become fully operational.

Another category of LSPDB state synchronization is an incremental (Delta) LSP Database (LSPDB) state synchronization, where only the LSPs underwent state change are synchronized between the session restart. This may include new/modified/deleted LSPs.

Segment Routing (SR) technology illustrates a source routing and tunneling paradigms where a source node can choose a path without relying on hop-by-hop signaling protocols such as LDP or RSVP-TE. Each path is specified as a set of "segments" advertised by link-sate routing protocols. A Segment Routed path (SR path) can be derived from an Interior Gateway Protocol, IGP, Shortest Path Tree (SPT). Segment Routed Traffic Engineering paths (SR-TE paths) may not follow IGP SPT. Such paths may be chosen by a suitable network planning tool and provisioned on the source node of SR-TE path.

It is possible to use a stateful PCE for computing one or more SR-TE paths taking into account various constraints and objective functions. Once a path is chosen, the stateful PCE can instantiate an SR-TE path on a PCC using specific PCEP extensions.

The PCE Central Controller(PCECC) solution allow for a dynamic MPLS network that is eventually controlled and deployed without the deployment of Resource Reservation Protocol Traffic Engineering (RSVP-TE) protocol or extended Interior Gateway Protocol (IGP) protocol with node/adjacency segment identifiers signaling capability while providing all the key MPLS functionalities needed by the service providers.

Figure 2 illustrates the modes of LSP that are supported by PCECC according to state of the art. A basic PCECC 201 refers to a forwarding similar to RSVP-TE signaled LSP without the RSVP-TE signaling. The PCECC allocates and downloads the label entries along the LSP and the remaining processing is similar to the stateful PCE mechanism. The PCECC SR-BE 202 refers to forwarding similar to LDP LSP without LDP signaling or IGP-SR extension. The SR Node Label are allocated and distributed in the domain centrally by the PCE via PCEP. Each node (PCC) relies on local IGP for the next hop calculation. PCECC SR-TE refers to forwarding using label stack similar to IGP based SR_TE without IGP-SR extension. The SR node and adjacency labels are allocated and distributed in the domain centrally by the PCE via PCEP by PCECC. State of the art explains setup of different modes of LSP by downloading the labels to all corresponding routers (PCC) in the network. The PCECC owns the label allocation, maintains the labels and distributes the labels to PCCs in the network. However, state of the art is completely silent with respect to management of label database at router (PCC) aligning with label database at PCECC on initial session UP or session flap.

US 8 885 463 B1 discloses a method for extending a path computation element (PCE) communication protocol (PCEP) to support messages that enable PCEs to actively modify Multi-Protocol Label Switching (MPLS) for Traffic Engineering Label Switched Paths (TE LSPs) in and across network domains. In one example, an LSP database of a router includes configuration data for one or more LSPs configured in the router and further includes LSP state information specifying a current state of all LSPs of the router. A path computation client (PCC) of a router establishes an extended PCEP session and synchronizes LSP state information to a stateful PCE using the extended PCEP session. Subsequently, the stateful PCE sends an LSP update request to the PCC in the extended PCEP session, wherein the LSP update request includes one or more updated parameters for the LSP. The PCC then re-signals the LSP through the network according to the updated parameters.

### SUMMARY

The present invention is carried out as described in the appended claims.

### BRIEF DESCRIPTION OF DRAWINGS

The detailed description is described with reference to the accompanying figures. In the figures, the left-most digit(s) of a reference number identifies the figure in which the reference number first appears. The same numbers are used throughout the drawings to reference like features and components.
Figure 1 illustrates categorization of stateful Path Computation Element (PCE) as per state of the art.
Figure 2 illustrates categorization of modes of Label Switch Path (LSP) as per state of the art.
Figure 3 illustrates a flowchart representation of a method for label database synchronization in a packet switched communication network according to an embodiment of the present disclosure.
Figure 4 describes a Label Update Message as used in an embodiment of the present disclosure.
Figure 5 describes an SR object as used in an embodiment of the present disclosure.
Figure 6 illustrates a flowchart representation of a method for label database synchronization in a packet switched communication network according to another embodiment of the present disclosure.
Figure 7 describes the PCECC capability Type Length Value according to an embodiment of present disclosure.
Figure 8 describes the Label-DB version Type Length Value (LABEL-DB-VERSON TLV) according to an embodiment of the present disclosure.
Figure 9 illustrates a path computation element (PCE) according to an embodiment of the present disclosure.
Figure 10 illustrates a router according to an embodiment of the present disclosure.

### DESCRIPTION OF EMBODIMENTS

The following discussion provides a brief, general description of a suitable computing environment in which various embodiments of the present disclosure can be implemented. The aspects and embodiments are described in the general context of computer executable mechanisms such as routines executed by a handheld device e.g. a mobile phone, a personalized digital assistant, a cellular device, a tablet et al. The embodiments described herein can be practiced with other system configurations, including Internet appliances, hand held devices, multi-processor systems, microprocessor based or programmable consumer electronics, network PCs, mini computers, mainframe computers and the like. The embodiments can be embodied in a special purpose computer or data processor that is specifically programmed configured or constructed to perform one or more of the computer executable mechanisms explained in detail below.

Exemplary embodiments now will be described with reference to the accompanying drawings. The disclosure may, however, be embodied in many different forms and should not be construed as limited to the embodiments set forth herein; rather, these embodiments are provided so that this disclosure will be thorough and complete, and will fully convey its scope to those skilled in the art. The terminology used in the detailed description of the particular exemplary embodiments illustrated in the accompanying drawings is not intended to be limiting. In the drawings, like numbers refer to like elements.

The specification may refer to "an", "one" or "some" embodiment(s) in several locations. This does not necessarily imply that each such reference is to the same embodiment(s), or that the feature only applies to a single embodiment. Single features of different embodiments may also be combined to provide other embodiments.

As used herein, the singular forms "a", "an" and "the" are intended to include the plural forms as well, unless expressly stated otherwise. It will be further understood that the terms "includes", "comprises", "including" and/or "comprising" when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. Furthermore, "connected" or "coupled" as used herein may include wirelessly connected or coupled. As used herein, the term "and/or" includes any and all combinations and arrangements of one or more of the associated listed items.

Unless otherwise defined, all terms (including technical and scientific terms) used herein have the same meaning as commonly understood by one of ordinary skill in the art to which this disclosure pertains. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The figures depict a simplified structure only showing some elements and functional entities, all being logical units whose implementation may differ from what is shown. The connections shown are logical connections; the actual physical connections may be different. It is apparent to a person skilled in the art that the structure may also comprise other functions and structures. It should be appreciated that the functions, structures, elements and the protocols used in communication are irrelevant to the present disclosure. Therefore, they need not be discussed in more detail here.

In addition, all logical units described and depicted in the figures include the software and/or hardware components required for the unit to function. Further, each unit may comprise within itself one or more components, which are implicitly understood. These components may be operatively coupled to each other and be configured to communicate with each other to perform the function of the said unit.

Similar to LSPDB synchronization from PCC to stateful PCE, LABEL-DB synchronization is performed from stateful PCE to PCC. LABEL-DB synchronization mechanism is defined under two categories of basic and advanced features. The basic LABEL-DB synchronization supports to synchronize full label database from PCE to PCC in Initial session UP or every session flap while the advanced LABEL-DB synchronization supports to optimize the label database synchronization based on the status of label database at both PCEP speakers. Both speakers should support LABEL-DB version capability and maintain LABEL-DB version for each session. Two optimization mechanisms, avoidance and incremental update, are defined for LABEL-DB synchronization. Apart from these two optimization mechanisms, full LABEL-DB synchronization is performed unconditionally. Under the avoidance aspect of optimization mechanism, LABEL-DB synchronization is skipped if the LABEL-DB version is same at both PCEP speakers. Further, an incremental LABEL-DB synchronization is performed if the LABEL-DB version is different and non-zero.

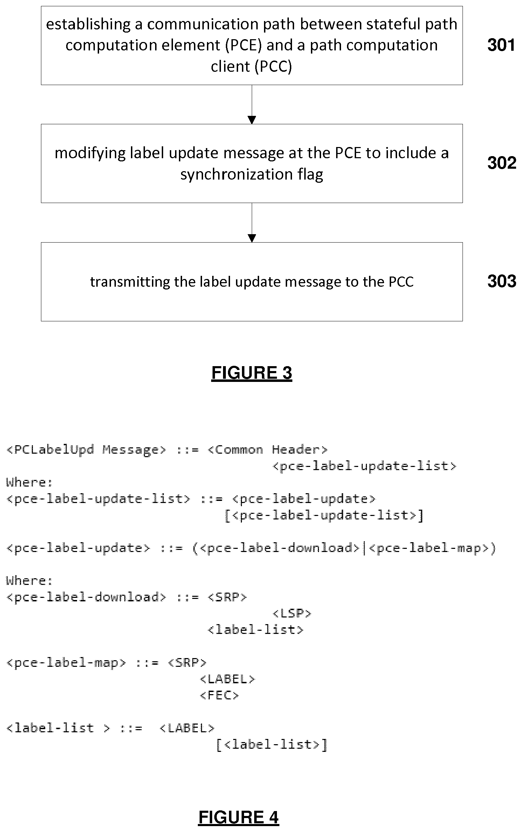

Figure 3 of the present disclosure illustrates a flowchart representation of a method for label database synchronization in a packet switched communication network. The method 300 disclosed comprises establishing a communication path between stateful path computation element (PCE) and a path computation client (PCC) 301, modifying label update message at the PCE to include a synchronization flag 302, and transmitting the label update message to the PCC 303. The method 300 is performed on initial session or every session flap of communication.

The method 300 disclosed corresponds to basic LABEL-DB synchronization where the PCECC maintains the Label Database per session and sends the Label Database snapshot to the PCC in a sequence of Label Update Message, also referred to as PCLabelUpd message. The PCLabelUpd message used is illustrated in Figure 4 of the present disclosure.

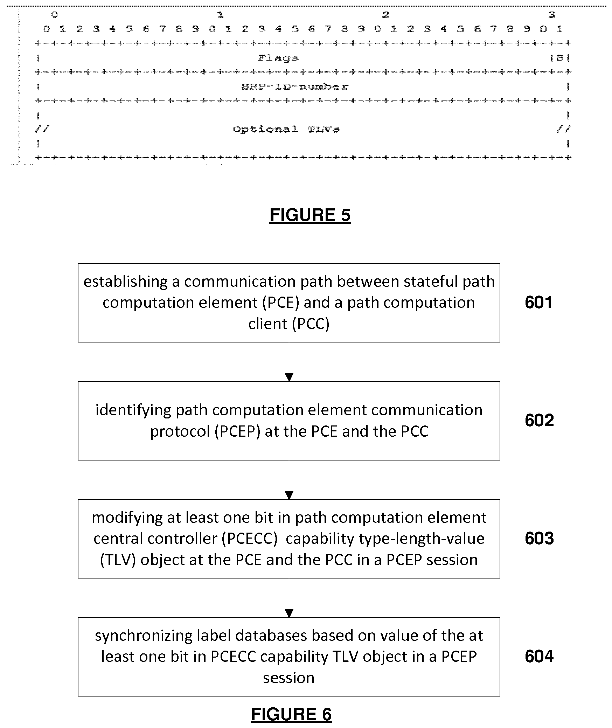

The Label Update Message is a PCEP message sent by a PCE to a PCC to download label or update the label map. The same message is also used to clean up the Label entry. The Label Update Message is used to download label along the path of the LSP for the basic PCECC mode, as well as to update the label map for the Node and Adjacency Label in case of SR. According to the embodiment of the present disclosure, each Label Update Message sent during LABEL-DB Synchronization has a SYNC(S) Flag in the SRP Object. The SRP Object used is illustrated in Figure 5 of the present disclosure. The SRP (Stateful PCE Request Parameters) object must be carried within PCUpd messages and may be carried within PCRpt and PCErr messages. The SRP object is used to correlate between update requests sent by the PCE and the error reports and state reports sent by the PCC.

The SRP object body has a variable length and may contain additional TLVs. SRP-ID-number (32 bits): The SRP-ID-number value in the scope of the current PCEP session uniquely identify the operation that the PCE has requested the PCC to perform on a given LSP. The SRP-ID-number is incremented each time a new request is sent to the PCC, and may wrap around. The values 0x00000000 and 0xFFFFFFFF are reserved. Every request to update an LSP receives a new SRP-ID-number. This number is unique per PCEP session and is incremented each time an operation is requested from the PCE. Thus, for a given LSP there may be more than one SRP-ID-number unacknowledged at a given time. The value of the SRP-ID-number is echoed back by the PCC in PCErr and PCRpt messages to allow for correlation between requests made by the PCE and errors or state reports generated by the PCC. If the error or report were not as a result of a PCE operation (for example in the case of a link down event), the reserved value of 0x00000000 is used for the SRP-ID-number. The absence of the SRP object is equivalent to an SRP object with the reserved value of 0x00000000. An SRP-ID- number is considered unacknowledged and cannot be reused until a PCErr or PCRpt arrives with an SRP-ID-number equal or higher for the same LSP. In case of SRP-ID-number wrapping the last SRP-ID-number before the wrapping MUST be explicitly acknowledged, to avoid a situation where SRP-ID-numbers remain unacknowledged after the wrap. This means that the PCC may need to issue two PCUpd messages on detecting a wrap.

Figure 6 of the present disclosure illustrates a flowchart representation of a method for label database synchronization in a packet switched communication network. The method 600 discloses comprises establishing a communication path between stateful path computation element (PCE) and a path computation client (PCC) 601, identifying path computation element communication protocol (PCEP) at the PCE and the PCC 602, modifying at least one bit in path computation element central controller (PCECC) capability type-length-value (TLV) object at the PCE and the PCC in a PCEP session 603 and synchronizing label databases based on value of the at least one bit in PCECC capability TLV in a PCEP session 604.

According to an exemplary embodiment, modifying at least one bit in PCECC capability TLV comprises adding a label database version flag in PCECC capability TLV and also advertising label database version being used at the PCE and the PCC in a Open message. In another embodiment, the step of modifying comprises modifying a delta label database synchronization capability flag in PCECC capability TLV at the PCC and the PCE.

According to another exemplary embodiment, no synchronization is implemented if the advertised label database version being used at the PCE and the PCC is identical.

According to another exemplary embodiment, partial synchronization of label databases is implemented if value of the synchronization flag in PCECC capability TLV is set to '1' at both the PCC and the PCE.

In an embodiment of the present disclosure, absolute synchronization of label databases is implemented if value of the synchronization flag in PCECC capability TLV is not ' 1' at both the PCC and the PCE.

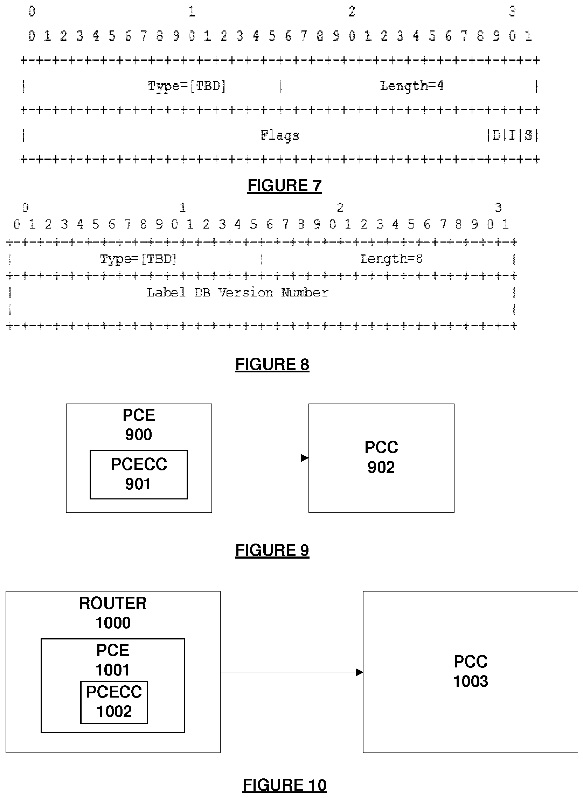

The method 600 corresponds to Advanced LABEL-DB synchronization where both PCEP speakers specify LABEL-DB version support in an Open message and the PCE generates and maintains the LABEL-DB version per session and encodes it in PCLabelUpd message. LABEL-DB Version support is advertised on a PCEP session during session startup using the INCLUDE-LABEL-DB-VERSION (I) bit in the PCECC capability TLV. The PCECC capability TLV is illustrated in Figure 7 of the present disclosure. The PCECC-CAPABILITY TLV is an optional TLV for use in the OPEN Object for PCECC capability advertisement. Advertisement of the PCECC capability implies support of LSPs that are setup through PCECC as per certain defined PCEP extensions.

If both PCEP speakers set the I flag in PCECC Capability TLV to 1, the PCE must include the LABEL-DB-VERSION TLV in each SRP object of the PCLabelUpd message. The LABEL-DB-VERSION TLV used to encode in open object and SRP object is illustrated in Figure 8 of the present disclosure. The type of TLV is not decided however, it has a fixed length of 8 octets. The value contains a 64-bit unsigned integer, representing the Label DB Version Number. This is an optional TLV carried in Open object and Label object.

Figure 9 illustrates a block diagram representation of a path computation element (PCE) according to an embodiment of the present disclosure. The PCE 900 comprises a path computation element central controller (PCECC) 902. According to an exemplary embodiment, the PCECC 901 is configured to establish a communication path between the PCE 900 and a path computation client (PCC) 902, modifying label update message at the PCE 900 to include a synchronization flag and transmitting the label update message to the PCC 900. According to another exemplary embodiment, the PCECC 901 is configured to establish a communication path between stateful path computation element (PCE) 900 and a path computation client (PCC) 902, identify path computation element communication protocol (PCEP) at the PCE 900 and the PCC 902, modify at least one bit in path computation element central controller (PCECC) capability type-length-value (TLV) object at the PCE 900 and the PCC 902 in a PCEP session and synchronize label databases based on value of the at least one bit in PCECC capability TLV object in a PCEP session.

Figure 10 illustrates a block diagram representation of a router according to an embodiment of the present disclosure. The router 1000 comprises a path computation element (PCE) 1001 comprising a path computation element central controller (PCECC) 1002 communicating with the path computation client (PCC) 1003. The PCECC 1002 may function as per exemplary embodiments of embodiment disclosed in Figure 9.

As disclosed previously, LABEL-DB synchronization may be skipped following a PCEP session restart if labels are not changed for the node. If both PCEP speakers include the LABEL-DB-VERSION TLV in the OPEN object and the Label DB Version Number is matched, the PCECC may skip LABEL-DB synchronization.

Further, instead of dumping full Label Database to the PCC, the PCECC synchronizes the delta (changes) when DELTA-LABEL-SYNC-CAPABILITY is set to 1 by both PCC and PCE in PCECC Capability TLV. DELTA-LABEL-SYNC-CAPABILITY, which is referred to as D flag setting, may be combined by PCC and PCE in a manner which results in full LABEL-DB synchronization. If both PCEP speakers include the LABEL-DB-VERSION TLV in the OPEN object and the Label DB Version Numbers are non-zero and different then the PCECC perform Delta LABEL-DB synchronization.

Implementation of embodiments of the present disclosure results in the PCECC owning the label allocation, maintaining the labels and distributing the labels to PCC(s) in the network. Hence, it is needed that all routers (PCC) in the network which are controlled by PCECC should align their label database with the PCECC label database on initial session UP or session flap. PCECC cannot be deployed without label database synchronization.

Without label database synchronization as illustrated in the present disclosure, PCECC cannot be deployed as on session flap, labels at PCCs and PCE may not be synchronized, which would in turn lead to network failure. Each PCLabelUpd message sent during LABEL-DB synchronization has the SYNC Flag in the SRP object set to 1. LABEL-DB Version support is advertised on a PCEP session during session startup using the INCLUDE-LABEL-DB-VERSION (IDLB) bit in the PCECC Capability TLV. If both PCEP speakers set the IDLB flag in the PCECC capability TLV to 1, the PCE include the LABEL-DB-VERSION TLV in each SRP object of the PCLabelUpd message. Instead of dumping full Label DB to the PCC, the PCECC synchronizes the delta (changes) when DELTA-LABEL-SYN-CAPABILITY (D Flag) is set to 1 by both PCC and PCE in PCECC Capability TLV. Other combination of D flag setting by PCC and PCE result in full LABEL-DB synchronization.

As will be appreciated by one of skill in the art, the present disclosure may be embodied as a method, and as a path computational element PCE. Accordingly, the present disclosure may take the form of an entirely hardware embodiment, a software embodiment or an embodiment combining software and hardware aspects all generally referred to herein as a "circuit" or "module." Furthermore, the present disclosure may take the form of a computer program product on a computer-usable storage medium having computer-usable program code embodied in the medium.

Furthermore, the present disclosure was described in part above with reference to flowchart illustrations and/or block diagrams of methods, apparatus (systems), and computer program products according to embodiments of the disclosure.

It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

Instructions may also be stored in a computer- readable memory that can direct a computer or other programmable data processing apparatus to function in a particular manner, such that the instructions stored in the computer-readable memory produce an article of manufacture including instruction means which implement the function/act specified in the flowchart and/or block diagram block or blocks.

Instructions may also be loaded onto a computer or other programmable data processing apparatus like a scanner/check scanner to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

The flowchart and schematic diagrams of Figures 3 to 10 illustrate the architecture, functionality, and operations of some embodiments of methods and apparatuses for label database synchronization in a packet switched communication network. In this regard, each block may represent a module, segment, or portion of code, which comprises one or more executable instructions for implementing the specified logical function(s). It should also be noted that in other implementations, the function(s) noted in the blocks may occur out of the order noted in the figures. For example, two blocks shown in succession may, in fact, be executed substantially concurrently or the blocks may sometimes be executed in the reverse order, depending on the functionality involved.

In the drawings and specification, there have been disclosed exemplary embodiments of the disclosure. Although specific terms are employed, they are used in a generic and descriptive sense only and not for purposes of limitation.

## Claims

1. A method for label database synchronization performed by a stateful path computation element, PCE, in a packet switched communication network comprising:
establishing (601) a communication path between the PCE and a path computation client, PCC;
modifying (603) at least one bit in path computation element central controller, PCECC, capability type-length-value, TLV, at the PCE and the PCC in a path computation element protocol, PCEP, session;
synchronizing (604) label databases of the PCE and the PCC based on value of label database version being advertised by the PCE and the PCC in a PCEP session,
wherein modifying at least one bit in PCECC capability TLV comprises adding a label database version flag in PCECC capability TLV and advertising the label database version being used at the PCE and the PCC in a Open message.

2. The method as claimed in claim 1, wherein modifying at least one bit in PCECC capability TLV further comprises modifying a delta label database synchronization capability flag in PCECC capability TLV at the PCC and the PCE.

3. The method as claimed in claim 2, wherein partial synchronization of label databases is implemented if value of the delta label database synchronization capability flag in PCECC capability TLV is set to '1' at both the PCC and the PCE.

4. The method as claimed in claim 2 or 3, wherein absolute synchronization of label databases is implemented if value of the delta label database synchronization capability flag in PCECC capability TLV object is not '1' at both the PCC and the PCE.

5. The method as claimed in claim 1, wherein label update messages are sent during label database synchronization having a synchronization (S) flag set to '1' in stateful PCE request parameters, SRP object.

6. A path computation element, PCE, comprising:
a stateful path computation element central controller, PCECC, configured to:
establish a communication path between the PCE and a path computation client, PCC;
identify path computation element communication protocol, PCEP at the PCE and the PCC;
modify at least one bit in PCECC capability type-length-value, TLV, at the PCE and the PCC in a PCEP session; and
synchronize label databases of the PCE and the PCC based on value of label database version being advertised by the PCE and the PCC in a PCEP session;
wherein modifying at least one bit in PCECC capability TLV comprises adding a label database version" flag in PCECC capability TLV and advertising the label database version being used at the PCE and the PCC in a Open message.

7. The PCE as claimed in claim 6, wherein if said at least one bit in PCECC capability TLV is set to '1' then all future label update messages need to advertise label database version

8. The PCE as claimed in claim 6, wherein modifying at least one bit in PCECC capability TLV further comprises modifying a delta label database synchronization capability flag in PCECC capability TLV at the PCC and the PCE.

9. The PCE as claimed in claim 8, wherein partial synchronization of label databases is implemented if value of the delta label database synchronization capability flag in PCECC capability TLV is set to '1' at both the PCC and the PCE.

10. The PCE as claimed in claim 8 or 9, wherein absolute synchronization of label databases is implemented if value of the delta label database synchronization capability flag in PCECC capability TLV is not '1' at both the PCC and the PCE.

11. The PCE as claimed in claim 6 or 7, wherein label update messages are sent during label database synchronization having a synchronization (S) flag set to '1' in stateful PCE request parameters, SRP, object.

## Patentansprüche

1. Verfahren zur Etikettdatenbanksynchronisation, durchgeführt durch ein zustandsbehaftetes Pfadberechnungselement, PCE, in einem paketvermittelten Kommunikationsnetzwerk, umfassend:
Herstellen (601) eines Kommunikationspfads zwischen dem PCE und einem Pfadberechnungs-Client, PCC;
Abändern (603) mindestens eines Bits im Fähigkeits-Typ-Längen-Wert, TLV, der Pfadberechnungselement-Zentralsteuereinrichtung, PCECC, am PCE und dem PCC in einer Pfadberechnungselementprotokoll-, PCEP-, -Sitzung;
Synchronisieren (604) von Etikettdatenbanken des PCE und des PCC basierend auf dem von dem PCE und dem PCC in einer PCEP-Sitzung angekündigten Wert der Etikettdatenbank- Version,
wobei das Abändern mindestens eines Bits im PCECC-Fähigkeits-TLV das Hinzufügen eines Etikettdatenbank-Versionsflags im PCECC-Fähigkeits-TLV und das Ankündigen der am PCE und dem PCC verwendeten Etikettdatenbank-Version in einer OPEN-Nachricht umfasst.

2. Verfahren nach Anspruch 1, wobei das Abändern mindestens eines Bits im PCECC-Fähigkeits-TLV ferner das Abändern eines Delta-Etikettdatenbank-Synchronisationsfähigkeitsflags im PCECC-Fähigkeits-TLV bei dem PCC und bei dem PCE umfasst.

3. Verfahren nach Anspruch 2, wobei Teilsynchronisation von Etikettdatenbanken implementiert wird, falls der Wert des Delta-Etikettdatenbank-Synchronisationsfähigkeitsflags im PCECC-Fähigkeits-TLV sowohl bei dem PCC als auch bei dem PCE auf "1" gesetzt ist.

4. Verfahren nach Anspruch 2 oder 3, wobei absolute Synchronisation von Etikettdatenbanken implementiert wird, falls der Wert des Delta-Etikettdatenbank-Synchronisationsfähigkeitsflags im PCECC-Fähigkeits-TLV sowohl bei dem PCC als auch bei dem PCE nicht "1" ist.

5. Verfahren nach Anspruch 1, wobei während der Etikettdatenbanksynchronisation Etikettaktualisierungsnachrichten gesendet werden, die ein auf "1" gesetztes Synchronisations-(S)-Flag in einem zustandsbehafteten PCE-Anforderungsparameter-, SRP-, -Objekt aufweisen.

6. Pfadberechnungselement, PCE, umfassend:
zustandsbehaftete Pfadberechnungselement-Zentralsteuereinrichtung, PCECC, ausgelegt zum
Herstellen eines Kommunikationspfads zwischen dem PCE und einem Pfadberechnungs-Client, PCC;
Identifizieren des Pfadberechnungselement-Kommunikationsprotokolls, PCEP, bei dem PCE und dem PCC;
Abändern mindestens eines Bits im PCECC-Fähigkeits-Typ-Längen-Wert, TLV, bei dem PCE und dem PCC in einer PCEP-Sitzung; und
Synchronisieren von Etikettdatenbanken des PCE und des PCC basierend auf dem von dem PCE und dem PCC in einer PCEP-Sitzung angekündigten Wert der Etikettdatenbank- Version;
wobei das Abändern mindestens eines Bits im PCECC-Fähigkeits-TLV das Hinzufügen eines Etikettdatenbank-Versionsflags im PCECC-Fähigkeits-TLV und das Ankündigen der am PCE und dem PCC verwendeten Etikettdatenbank-Version in einer OPEN-Nachricht umfasst.

7. PCE nach Anspruch 6, wobei, falls das mindestens eine Bit im PCECC-Fähigkeits-TLV auf "1" gesetzt ist, anschließend alle künftigen Etikettaktualisierungsnachrichten die Etikettdatenbank-Version ankündigen müssen.

8. PCE nach Anspruch 6, wobei das Abändern mindestens eines Bits im PCECC-Fähigkeits-TLV ferner das Abändern eines Delta-Etikettdatenbank-Synchronisationsfähigkeitsflags im PCECC-Fähigkeits-TLV bei dem PCC und dem PCE umfasst.

9. PCE nach Anspruch 8, wobei Teilsynchronisation von Etikettdatenbanken implementiert wird, falls der Wert des Delta-Etikettdatenbank-Synchronisationsfähigkeitsflags im PCECC-Fähigkeits-TLV sowohl bei dem PCC als auch bei dem PCE auf "1" gesetzt ist.

10. PCE nach Anspruch 8 oder 9, wobei absolute Synchronisation von Etikettdatenbanken implementiert wird, falls der Wert des Delta-Etikettdatenbank-Synchronisationsfähigkeitsflags im PCECC-Fähigkeits-TLV sowohl bei dem PCC als auch bei dem PCE nicht "1" ist.

11. PCE nach Anspruch 6 oder 7, wobei während der Etikettdatenbanksynchronisation Etikettaktualisierungsnachrichten gesendet werden, die ein auf "1" gesetztes Synchronisations-(S)-Flag in einem zustandsbehafteten PCE-Anforderungsparameter-, SRP-, -Objekt aufweisen.

## Revendications

1. Procédé de synchronisation de base de données d'étiquettes réalisé par un élément de calcul de chemin (PCE) à états dans un réseau de communication à commutation de paquets, le procédé comprenant les étapes consistant à :
établir (601) un chemin de communication entre le PCE et un client de calcul de chemin (PCC) ;
modifier (603) au moins un bit dans un objet Type-Longueur-Valeur (TLV) de capacité de contrôleur centralisé d'élément de calcul de chemin (PCECC) au niveau du PCE et du PCC dans une session sur protocole par élément de calcul de chemin (PCEP) ;
synchroniser (604) des bases de données d'étiquettes du PCE et du PCC sur la base d'une valeur de version de base de données d'étiquettes qui est annoncée par le PCE et le PCC dans une session PCEP,
la modification d'au moins un bit dans un TLV de capacité PCECC comprenant l'ajout d'un indicateur de version de base de données d'étiquettes dans le TLV de capacité PCECC et l'annonce de la version de base de données d'étiquettes qui est utilisée au niveau du PCE et du PCC dans un message ouvert.

2. Procédé selon la revendication 1, dans lequel la modification d'au moins un bit dans un TLV de capacité PCECC comprend en outre la modification d'un indicateur de capacité delta de synchronisation de base de données d'étiquettes dans un TLV de capacité PCECC au niveau du PCC et du PCE.

3. Procédé selon la revendication 2, dans lequel une synchronisation partielle de bases de données d'étiquettes est mise en œuvre si une valeur de l'indicateur de capacité delta de synchronisation de base de données d'étiquettes dans un TLV de capacité PCECC est fixée sur « 1 » au niveau du PCC et du PCE.

4. Procédé selon la revendication 2 ou 3, dans lequel une synchronisation absolue de bases de données d'étiquettes est mise en œuvre si une valeur de l'indicateur de capacité delta de synchronisation de base de données d'étiquettes dans un objet TLV de capacité PCECC n'est pas égale à « 1 » au niveau du PCC et du PCE.

5. Procédé selon la revendication 1, dans lequel des messages de mise à jour d'étiquette sont envoyés pendant une synchronisation de base de données d'étiquettes ayant un indicateur de synchronisation (S) fixé sur « 1 » dans un objet de paramètres de demande PCE à états (SRP).

6. Élément de calcul de chemin (PCE) comprenant :
un contrôleur centralisé d'élément de calcul de chemin (PCECC) à états, configuré pour :
établir un chemin de communication entre le PCE et un client de calcul de chemin (PCC) ;
identifier un protocole de communication par élément de calcul de chemin (PCEP) au niveau du PCE et du PCC ;
modifier au moins un bit dans un objet Type-Longueur-Valeur (TLV) de capacité de PCECC au niveau du PCE et du PCC dans une session PCEP ; et
synchroniser des bases de données d'étiquettes du PCE et du PCC sur la base d'une valeur de version de base de données d'étiquettes qui est annoncée par le PCE et le PCC dans une session PCEP ;
la modification d'au moins un bit dans un TLV de capacité PCECC comprenant l'ajout d'un indicateur de version de base de données d'étiquettes dans le TLV de capacité PCECC et l'annonce de la version de base de données d'étiquettes qui est utilisée au niveau du PCE et du PCC dans un message ouvert.

7. PCE selon la revendication 6, dans lequel si ledit au moins un bit dans le TLV de capacité PCECC est fixé sur « 1 », alors tous les futurs messages de mise à jour d'étiquette doivent annoncer une version de base de données d'étiquettes.

8. PCE selon la revendication 6, dans lequel la modification d'au moins un bit dans un TLV de capacité PCECC comprend en outre la modification d'un indicateur de capacité delta de synchronisation de base de données d'étiquettes dans un TLV de capacité PCECC au niveau du PCC et du PCE.

9. PCE selon la revendication 8, dans lequel une synchronisation partielle de bases de données d'étiquettes est mise en œuvre si une valeur de l'indicateur de capacité delta de synchronisation de base de données d'étiquettes dans un TLV de capacité PCECC est fixée sur « 1 » au niveau du PCC et du PCE.

10. PCE selon la revendication 8 ou 9, dans lequel une synchronisation absolue de bases de données d'étiquettes est mise en œuvre si une valeur de l'indicateur de capacité delta de synchronisation de base de données d'étiquettes dans un TLV de capacité PCECC n'est pas égale à « 1 » au niveau du PCC et du PCE.

11. PCE selon la revendication 6 ou 7, dans lequel des messages de mise à jour d'étiquette sont envoyés pendant une synchronisation de base de données d'étiquettes ayant un indicateur de synchronisation (S) fixé sur « 1 » dans un objet de paramètres de demande PCE à états (SRP).
